# FASCICULE DE BREVET EUROPEEN

(11) **EP 1 245 883 B1**
(45) Date de publication et mention de la délivrance du brevet: **06.09.2006**
(21) Numéro de dépôt: 02362006.5
(22) Date de dépôt: 27.03.2002
(51) Int. Cl.: F16L 3/12

(54) **Collier de fixation de tuyau**
Rohrschelle
Pipe clamp

(30) Priorité: 27.03.2001 FR 0104093
(43) Date de publication de la demande: 02.10.2002
(73) Titulaire: Lucchina, Pascal, F-33200 Bordeaux (FR)
(72) Inventeur: Lucchina, Pascal, F-33200 Bordeaux (FR)
(74) Mandataire: Thébault, Jean-Louis

(56) Documents cités:
- FR-A- 2 594 903
- GB-A- 2 183 287
- US-A- 3 913 187
- US-A- 5 277 387

## Description

La présente invention a trait à un collier de fixation de tuyau adaptable et plus précisément un collier apte à assurer la fixation au choix, sur le site de pose, de tuyaux présentant un diamètre externe selon l'une ou l'autre de deux valeurs prédéterminées.

L'invention vise un perfectionnement au type de collier connu par FR 2 344 776. Ce document décrit un collier d'attache pour tuyau comportant deux segments de bride articulés sur un élément de fixation du collier par l'intermédiaire d'une charnière reliant ledit élément à une partie externe centrale de chaque segment. A leur extrémité opposée à l'élément de fixation, les segments de bride comportent des moyens d'accrochage mutuel lorsque lesdits segments sont dans une position où ils ceinturent le tuyau à fixer. L'ensemble du collier est monobloc et réalisé par moulage d'une matière plastique appropriée présentant une certaine élasticité.

En position de repos, les segments de bride du collier sont écartés et laissent entre eux un passage pour la fixation du collier sur un support, puis l'engagement du tuyau à fixer, ce dernier étant présenté avec son axe parallèle à l'axe de la bride définie par les segments.

Le tuyau est ainsi introduit dans l'espace entre les segments et pressé en direction de l'élément de fixation du collier en sorte, par effet de bascule élastique sur lesdits segments, de faire se refermer ces derniers autour du tuyau jusqu'au verrouillage mutuel des extrémités munies desdits moyens d'accrochage.

Un tel dispositif ne permet la fixation que de tuyaux présentant un diamètre externe égal ou très sensiblement égal au diamètre interne de la bride définie par les segments en position verrouillée.

On a cherché à perfectionner ce type de collier afin qu'il accepte, soit des variations légères d'un même diamètre nominal, soit différents diamètres à l'intérieur d'une plage plus ou moins large. C'est ainsi que par WO 97/23744, US 5 277 387 et DE 3 637 738 on connaît divers colliers reprenant le concept de base de FR 2 344 776 et incorporant des aménagements permettant la prise en compte de tuyaux de différents diamètres.

Cependant, ces colliers, tels ceux selon WO 97/23744 ne permettent que la prise en compte de légères variations d'un même diamètre, ou bien , tels ceux de US 5 277 387 et DE 3 637 738 n'assurent pas une fixation précise et ferme et sont complexes et difficiles et coûteux à réaliser.

La présente invention vise à pallier ces problèmes en proposant un perfectionnement au type de collier selon FR 2 344 776, permettant la fixation rapide de tuyaux de deux diamètres différents déterminés en mettant en oeuvre des moyens simples, faciles à réaliser et peu onéreux, tout en assurant une fixation sûre et ferme.

Le document FR 2 594 903 A1 décrit un collier comportant une paire de mâchoires externes et une paire de mâchoires internes pour lequel les mâchoires internes, en position écartée, viennent en appui contre la face interne des mâchoires externes.

A cet effet, l'invention a pour objet un collier de fixation de tuyau adaptable, comprenant une base de fixation, deux premiers segments de bride antagonistes articulés sur ladite base par l'intermédiaire d'une charnière reliant la base à une partie externe centrale de chaque segment, les extrémités desdits segments opposées à ladite base étant munies de moyens d'accrochage mutuel, où lesdits premiers segments sont munis chacun d'un second segment de bride, de courbure plus accentuée que celle des premiers segments, lesdits seconds segments étant disposés en regard l'un de l'autre et reliés à leurs extrémités aux premiers segments par des charnières et étant susceptibles d'occuper, au choix, l'une ou l'autre de deux positions extrêmes stables, l'une, dans laquelle ils font saillie dans l'espace entre les premiers segments, en sorte, à la fermeture des premiers segments, de constituer une seconde bride de diamètre inférieur à celui de la bride formée par les premiers segments et, l'autre, dite position d'escamotage, dans laquelle les seconds segments sont susceptibles d'être poussés dans une ouverture ménagée dans les premiers segments.

Avec un tel collier il est possible d'accepter deux diamètres de tuyau, même très différents, comme par exemple du simple au double. Pour la fixation de tuyau de petit diamètre, lesdits seconds segments sont placés, par simple pression manuelle, l'ensemble du collier étant avantageusement réalisé par moulage d'une matière plastique ayant une certaine élasticité, dans la position en saillie dans l'espace entre les premiers segments.

Le tuyau de petit diamètre se met en place dans le collier exactement de la même manière que dans le collier de type connu non muni des perfectionnements selon l'invention, les seconds segments de bride étant en position saillante dans l'espace entre les premiers segments.

En fin de pressage du tuyau en direction de la base du collier, à la fois les premiers segments de bride et les seconds segments se referment comme une mâchoire, le tuyau étant enserré dans lesdits seconds segments de bride.

Pour la fixation du tuyau de plus grand diamètre, les seconds segments de bride sont escamotés hors de l'espace entre les premiers segments et le tuyau est mis en place de la même façon. En fin de pressage du tuyau en direction de la base, les premiers segments de bride se referment sur le tuyau.

Suivant un mode de réalisation préféré, les seconds segments de bride ont une extrémité sensiblement commune avec l'extrémité, côté base, des premiers segments, cependant que l'autre extrémité est reliée par un pontage élastique déformable au premier segment, à proximité de l'extrémité du premier segment opposée à la base, chaque ensemble second segment - pontage étant susceptible, dans ladite position d'escamotage, de dégager totalement ledit espace entre les premiers segments.

Un tel collier est particulièrement simple et néanmoins pratique et efficace, tout en étant réalisable de manière particulièrement économique par simple moulage d'une pièce monobloc d'une matière plastique appropriée.

D'autres caractéristiques et avantages ressortiront de la description qui va suivre d'un mode de réalisation préféré du collier selon l'invention, description donnée à titre d'exemple uniquement et en regard des dessins annexés sur lesquels :
- la figure 1 est une vue en perspective d'un collier conforme à l'invention, prêt à être utilisé pour la fixation d'un tuyau de petit diamètre et en position d'ouverture ;
- la figure 2 est une vue de dessus du collier de la figure 1 ;
- la figure 3 est une vue de gauche du collier de la figure 1 ;
- la figure 4 est une vue en coupe suivant la ligne IV-IV du collier des figures 2 et 3 ;
- la figure 5 représente le collier de la figure 1 en position fermée ;
- la figure 6 à 9 sont des vues homologues des figures 1 à 4 montrant le collier de la figure 1 préparé pour la fixation d'un tuyau de grand diamètre ;
- la figure 10 est une vue homologue de celle de la figure 5 montrant le collier de la figure 6 en position fermée, et
- la figure 11 est une coupe, analogue à celle de la figure 9, montrant le collier en position fermée.

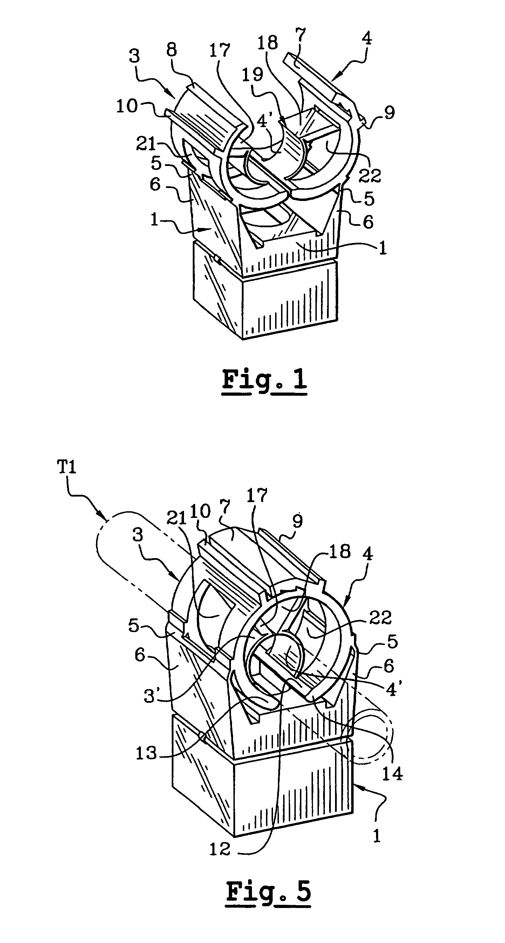

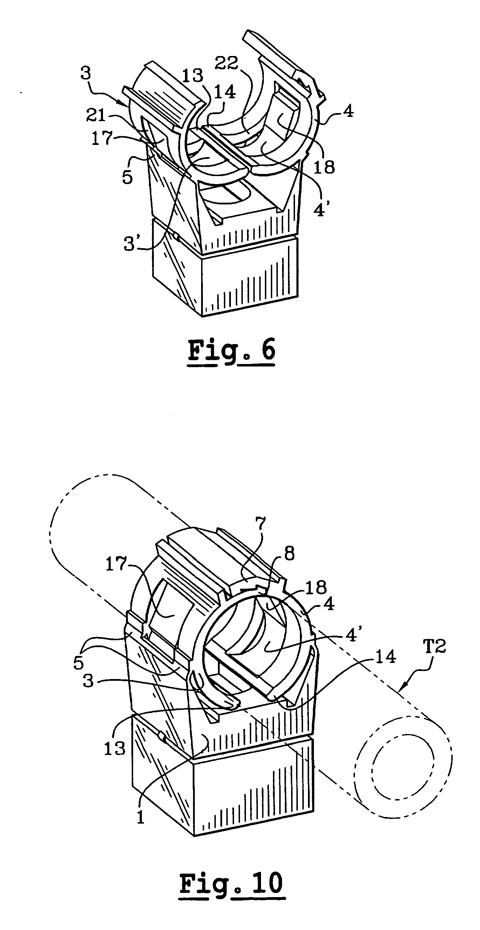

Sur les figures 1 et 5, on a représenté un collier selon l'invention destiné à la fixation de tuyaux de deux diamètres différents, l'un étant sensiblement le double de l'autre, le collier étant représenté dans son prépositionnement pour le petit diamètre et respectivement en position d'ouverture et en position de fermeture.

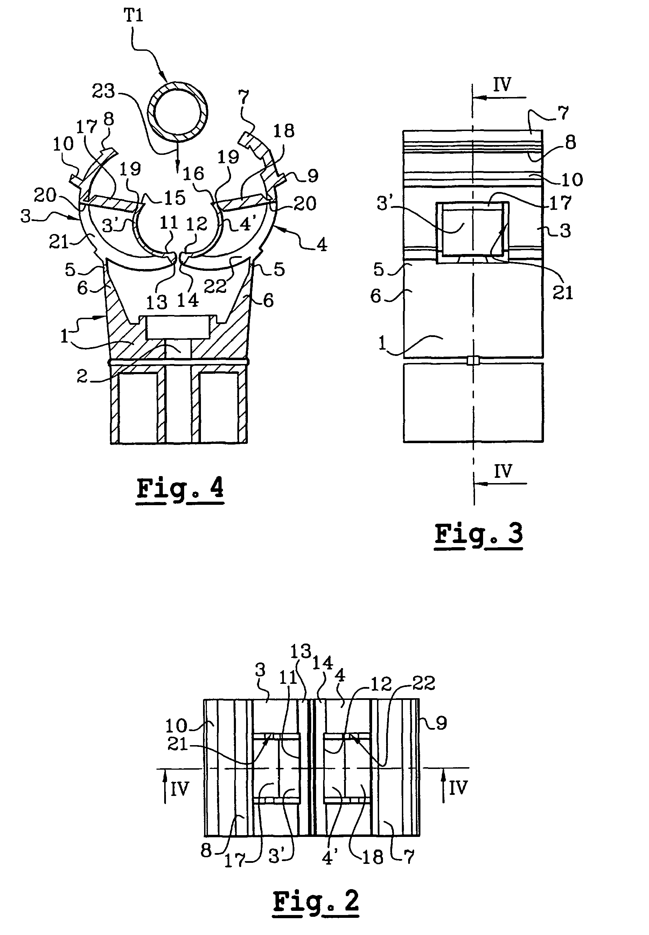

Le collier comporte, à la manière connue, une base 1 permettant la fixation du collier sur une paroi notamment, à l'aide d'une vis ou d'un boulon engagé dans un trou 2 (figure 4) traversant la base 1, et deux segments de bride 3 et 4, disposés en face à face et montés articulés sur la base 1 par l'intermédiaire de charnières 5 agencées à l'extrémité de prolongements 6 de la base 1.

Les segments 3, 4, dénommés par la suite premiers segments, sont de forme arquée rectangulaire en présentant une face interne concave de courbure correspondant au diamètre externe du tuyau à fixer.

Les charnières 5 relient les prolongements 6 aux premiers segments 3, 4 approximativement dans leur partie externe centrale.

Toujours à la manière connue, les extrémités des premiers segments 3, 4 opposées à la base 1 sont munis de moyens d'accrochage mutuel lorsque le collier est en position de fermeture (figure 5), constitués d'une languette à crochet 7 sur l'un (4) des premiers segments et d'une saillie de verrouillage 8 sur l'autre segment (3).

En 9 et 10 sont représentées deux nervures ménagées respectivement sur les premiers segments 3, 4 au voisinage des moyens d'accrochage 7, 8, pour permettre éventuellement la fermeture du collier sur un tuyau à l'aide d'une pince si nécessaire.

Conformément à l'invention, le collier décrit ci-dessus comporte en outre des moyens permettant, à l'aide du même collier, de fixer un tuyau présentant un diamètre externe inférieur à celui correspondant aux premiers segments de bride 3, 4, en l'occurrence un diamètre sensiblement égal à la moitié.

A cet effet, chaque premier segment (3, 4) est muni d'un second segment de bride, respectivement 3' et 4', de courbure correspondant audit petit diamètre.

Les seconds segments 3', 4' ont, comme les premiers segments 3, 4, une forme générale arquée rectangulaire et sont solidaires, par leur petit côté 11, 12 tourné vers la base, de l'extrémité 13, 14 des premiers segments 3, 4 proche de la base 1, cependant que le petit côté opposé, 15, 16 des segments 3', 4' est relié aux segments 3, 4 par un pontage 17, 18.

Les pontages 17, 18 présentent une forme également rectangulaire, plane et ont une épaisseur supérieure à celle des segments 3', 4' et sensiblement égale à celle des segments 3, 4.

Les pontages 17, 18 sont reliés aux seconds segments 3', 4' par une partie d'épaisseur réduite formant charnière 19 et aux premiers segments 3, 4 par une partie d'épaisseur réduite formant charnière 20. les charnières 20 se trouvent sensiblement à une mi-distance entre les charnières 5 et les extrémités (7, 8) des premiers segments 3, 4.

Par ailleurs, les zones des premiers segments 3, 4 situées entre les charnières 11 et 20, d'une part, et entre les charnières 12 et 20, d'autre part, sont ouvertes totalement en sorte de ménager une fenêtre arquée rectangulaire respectivement 21 et 22, vers laquelle les seconds segments 3', 4' avec leur pontage 17, 18 vont pouvoir être poussés à des fins d'escamotage, comme on le verra plus loin, grâce à l'élasticité du matériau constitutif du collier.

Le collier est en effet avantageusement réalisé en une seule pièce par moulage d'une matière plastique appropriée, semi-rigide et permettant par une certaine élasticité aux diverses charnières (5, 11, 12, 19 et 20) de jouer leur rôle.

En position d'ouverture du collier, comme représenté sur les figures 1 à 4, les seconds segments 3', 4' avec leur pontage 17, 18, font saillie dans l'espace entre les premiers segments 3, 4.

Les seconds segments 3', 4' sont ouverts, leurs bords inférieurs (côté base 1) étant parallèles et proches l'un de l'autre, cependant que leur bords supérieurs (15, 16) sont écartés d'une distance très sensiblement supérieure au diamètre externe du tuyau T1 (figure 4), de petit diamètre, à fixer sur le collier.

Le tuyau T1 est déplacé manuellement suivant la flèche 23, entre les premiers segments 3, 4 puis les seconds segments 3', 4', en direction de la base 1, après fixation bien entendu du collier sur le support concerné.

Par pression du tuyau T1 sur les parties 13, 14 des premiers segments 3, 4, ces derniers, ainsi que les seconds segments 3', 4' qu'ils portent, basculent autour des charnières 5, en sorte qu'en fin de course du tuyau, les seconds segments 3', 4' se referment sur lui et, dans le même temps, les moyens 7, 8 se verrouillent mutuellement comme représenté sur la figure 5.

Le tuyau T1 est alors fermement enserré et tenu en place par l'effet d'arc-boutement procuré par les pontages 17, 18 plaquant les seconds segments 3', 4' contre le tuyau en prenant appui sur les premiers segments 3, 4.

Cette première position, en saillie dans l'espace entre segments 3, 4, des seconds segments 3', 4' est stable en ce sens que toute tentative pour écarter lesdits seconds segments est contrée par l'arc-boutement élastique des pontages 17, 18.

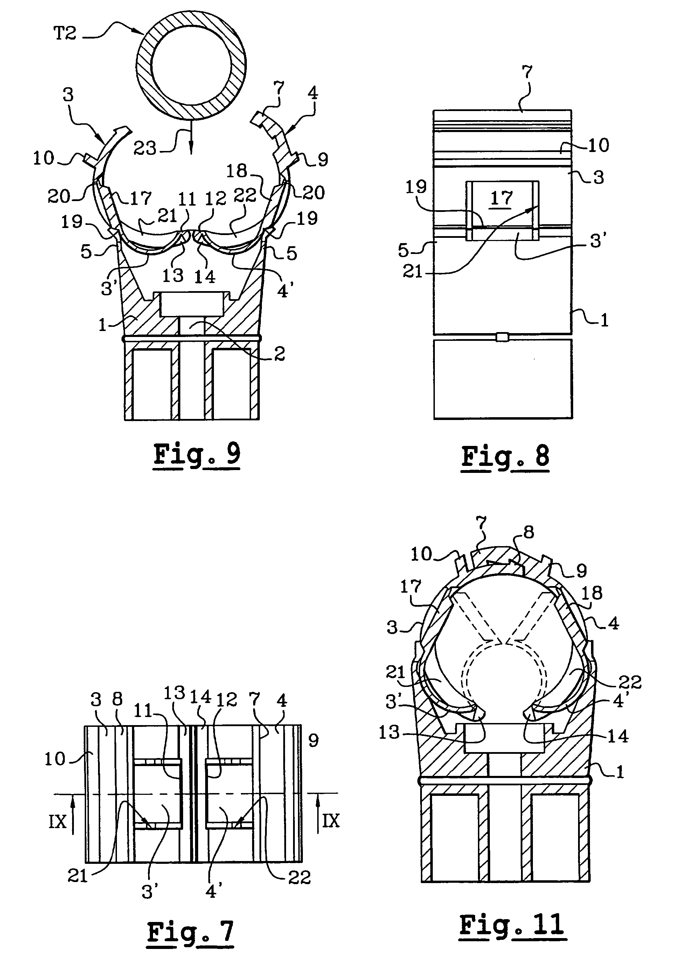

Lorsque l'on veut utiliser le collier pour la fixation d'un tuyau T2 (figure 9) de grand diamètre, on escamote par pression manuelle les ensembles seconds segments 3', 4' - pontages 17, 18, comme illustré par les figures 6 et 9 , en poussant lesdits ensembles vers les ouvertures 21, 22. Pour ce faire, on doit vaincre l'opposition formée par les pontages 17, 18 jusqu'au moment sensiblement de l'alignement entre les points 11, 19, 20, d'une part et 12, 19, 20, d'autre part.

Une fois ce point d'alignement dépassé, et par effet de bascule élastique, lesdits ensembles 3', 17 et 4', 18 se positionnent élastiquement dans la seconde position stable, dite d'escamotage, illustrée par la figure 9. lesdits ensembles se trouvent sensiblement à hauteur des ouvertures 21, 22 et dégagent ainsi totalement l'espace entre les premiers segments 3, 4.

Il est à noter que l'escamotage manuel préalable des ensembles 3', 4' ; 17, 18 n'est pas indispensable, car l'engagement du tuyau T2 à l'intérieur du collier va contraindre lesdits ensemble 3', 4' ; 17, 18 à s'écarter au passage dudit tuyau, du fait de l'élasticité du matériau du collier.

On a représenté sur la figure 11 en traits pleins la position d'escamotage des ensembles 3', 17 et 4', 18 et en tiretés la position dite "petit diamètre" desdits ensembles.

Le tuyau T2 est engagé dans le collier (figure 9) comme dans le mode d'utilisation de la figure 4, en direction (flèche 23) de la base 1, comme dans le cas d'un collier conventionnel présentant les seuls segments 3, 4.

La fixation du tuyau T2 est également assurée, dans ce cas, à la manière connue.

Si une partie des pontages 17, 18, se trouve en légère saillie à l'intérieur de l'espace entre les segments 3, 4, la fermeture complète de ces derniers autour du tuyau T2 entraînera le poussage par ce dernier desdites parties dans les ouvertures 21, 22 et ne gênera aucunement le serrage effectif et le verrouillage du tuyau.

Le rapport entre les diamètres des tuyaux T1, T2 peut bien entendu varier dans une large mesure, la courbure des segments 3', 4' et la longueur des pontages 17, 18 étant adaptées au diamètre du tuyau le plus petit des deux. Le collier de l'invention peut également naturellement accepter pour chacun des deux diamètres de légères variations, en plus ou en moins, du diamètre nominal, du fait de l'élasticité du matériau du collier.

## Revendications

1. Collier de fixation de tuyau adaptable, comprenant une base de fixation (1), deux premiers segments de bride (3, 4) antagonistes articulés sur ladite base par l'intermédiaire d'une charnière (5) reliant la base à une partie externe centrale de chaque segment, les extrémités desdits segments opposées à ladite base étant munies de moyens (7, 8) d'accrochage mutuel, où lesdits premiers segments (3, 4) sont munis chacun d'un second segment de bride (3', 4'), de courbure plus accentuée que celle des premiers segments, lesdits seconds segments étant disposés en regard l'un de l'autre et reliés à leurs extrémités aux premiers segments par des charnières (11, 12, 19, 20) et étant susceptibles d'occuper, au choix, l'une ou l'autre de deux positions extrêmes stables, l'une, dans laquelle ils font saillie dans l'espace entre les premiers segments (3, 4), en sorte, à la fermeture des premiers segments, de constituer une seconde bride de diamètre inférieur à celui de la bride formée par les premiers segments et, l'autre, dite position d'escamotage, dans laquelle les seconds segments (3', 4') sont susceptibles d'être poussés dans une ouverture (21, 22) ménagée dans les premiers segments (3, 4).

2. Collier suivant la revendication 1, **caractérisé en ce que** les seconds segments de bride (3', 4') ont une extrémité (11, 12) sensiblement commune avec l'extrémité (13, 14), côté base (1), des premiers segments (3, 4), cependant que l'autre extrémité (15, 16) est reliée par un pontage élastique déformable (17, 18) au premier segment (3, 4), à proximité de l'extrémité du premier segment opposée à la base, chaque ensemble second segment (3', 4')-pontage (17, 18) étant susceptible, dans ladite position d'escamotage d'être poussé dans ladite ouverture.

3. Collier suivant la revendication 2, **caractérisé en ce que** lesdits seconds segments (3', 4'), lesdits pontages (17, 18) et lesdites ouvertures (21, 22) ont une forme rectangulaire et lesdits pontages (17, 18) sont reliés à chaque extrémité par une charnière d'épaisseur réduite (19, 20) auxdits seconds segments (3', 4') et auxdits premiers segments (3, 4) respectivement.

4. Collier suivant l'une des revendications 1 à 3, **caractérisé en ce qu'**il est réalisé d'une seule pièce par moulage d'une matière plastique appropriée.

5. Collier suivant l'une des revendications 1 à 4 **caractérisé en ce que**, dans la position d'escamotage, les second segments dégagent totalement l'espace entre les premiers segments (3, 4).

## Claims

1. Adaptable pipe clamp, comprising a fixing base (1), two first opposing collar segments (3, 4) articulated on said base by means of a hinge (5) connecting the base to a central external part of each segment, the ends of said segments opposite to said base being provided with mutual coupling means (7, 8), where said first segments (3, 4) are each provided with a second collar segment (3', 4'), with curvature more pronounced than that of the first segments, said second segments being disposed facing each other and connected at their ends to the first segments by hinges (11, 12, 19, 20) and being capable of occupying, as wished, one or other of two stable extreme positions, one, in which they protrude into the space between the first segments (3, 4), so as to constitute, upon closure of the first segments, a second collar with a diameter smaller than that of the collar formed by the first segments and the other, so-called retraction position, in which the second segments (3', 4') are capable of being pushed into an opening (21, 22) made in the first segments (3, 4).

2. Clamp according to Claim 1, **characterised in that** the second collar segments (3', 4') have one end (11, 12) substantially common with the end (13, 14), on the base (1) side, of the first segments (3, 4), while the other end (15, 16) is connected by a deformable flexible bridge (17, 18) to the first segment (3, 4), close to the end of the first segment opposite to the base, each second segment (3', 4') - bridge (17, 18) assembly being capable, in said retraction position, of being pushed into said opening.

3. Clamp according to Claim 2, **characterised in that** said second segments (3', 4'), said bridges (17, 18) and said openings (21, 22) are rectangular in shape and said bridges (17, 18) are connected at each end by a hinge of reduced thickness (19, 20) to said second segments (3', 4') and to said first segments (3, 4) respectively.

4. Clamp according to one of Claims 1 to 3, **characterised in that** it is made in a single piece by moulding a suitable plastic material.

5. Clamp according to one of Claims 1 to 4, **characterised in that**, in the retraction position, the second segments totally clear the space between the first segments (3, 4).

## Patentansprüche

1. Anpassbare Rohrbefestigungsschelle, mit einer Befestigungsbasis (1), zwei ersten entgegenwirkenden Schellensegmenten (3, 4), die an der Basis über ein Scharnier (5) angelenkt sind, das die Basis mit einem zentralen äußeren Teil jedes Segments verbindet, wobei die Enden der Segmente gegenüber der Basis mit Mitteln (7, 8) für eine gegenseitige Verhakung versehen sind, wobei die ersten Segmente (3, 4) jeweils mit einem zweiten Schellensegment (3', 4') versehen sind, dessen Krümmung stärker als jene der ersten Segmente ist, wobei die zweiten Segmente einander gegenüber angeordnet und an ihren Enden mit den ersten Segmenten über Scharniere (11, 12, 19, 20) verbunden sind und wahlweise die eine oder die andere von zwei stabilen Extrempositionen einnehmen können, wobei sie in einer hiervon in den Raum zwischen den ersten Segmenten (3, 4) vorstehen, derart, dass sie beim Schließen der ersten Segmente eine zweite Schelle mit einem Durchmesser bilden, der kleiner als jener der durch die ersten Segmente gebildeten Schelle ist, und in der anderen hiervon, der so genannten eingezogenen Position, in eine Öffnung (21, 22) geschoben werden können, die in den ersten Segmenten (3, 4) ausgespart ist.

2. Rohrschelle nach Anspruch 1, **dadurch gekennzeichnet, dass** die zweiten Schellensegmente (3', 4') ein Ende (11, 12) besitzen, das mit dem Ende (13, 14) auf Seiten der Basis (1) der ersten Segmente (3, 4) im Wesentlichen übereinstimmt, während das andere Ende (15, 16) über eine verformbare elastische Brücke (17, 18) mit dem ersten Segment (3, 4) in der Umgebung des Endes des ersten Segments gegenüber der Basis verbunden ist, wobei jede Gesamtheit aus zweitem Segment (3', 4') und Brücke (17, 18) in der eingezogenen Position in die Öffnung geschoben werden kann.

3. Rohrschelle nach Anspruch 2, **dadurch gekennzeichnet, dass** die zweiten Segmente (3', 4'), die Brücken (17, 18) und die Öffnungen (21, 22) eine rechtwinklige Form haben und die Brücken (17, 18) an jedem Ende über ein Scharnier (19, 20) mit verringerter Dicke mit den zweiten Segmenten (3', 4') bzw. mit den ersten Segmenten (3, 4) verbunden sind.

4. Rohrschelle nach einem der Ansprüche 1 bis 3, **dadurch gekennzeichnet, dass** sie aus einem geeigneten Kunststoff durch Gießen einteilig hergestellt ist.

5. Rohrschelle nach einem der Ansprüche 1 bis 4, **dadurch gekennzeichnet, dass** die zweiten Segmente in der eingezogenen Position den Raum zwischen den ersten Segmenten (3, 4) vollständig freigeben.
